# EUROPÄISCHE PATENTSCHRIFT

(11) **EP 3 052 265 B1**
(45) Veröffentlichungstag und Bekanntmachung des Hinweises auf die Patenterteilung: **07.04.2021**
(21) Anmeldenummer: 14766733.1
(22) Anmeldetag: 18.09.2014
(51) Int. Cl.: B23D 79/00

(54) **THERMISCHE ENTGRATANLAGE MIT BEWEGLICHER TRAGBAUGRUPPE**
THERMAL DEBURRING MACHINE HAVING A MOVABLE SUPPORTING ASSEMBLY
INSTALLATION D'ÉBAVURAGE THERMIQUE COMPRENANT UN ENSEMBLE PORTEUR MOBILE

(30) Priorität: 30.09.2013 DE 102013219677
(43) Veröffentlichungstag der Anmeldung: 10.08.2016
(73) Patentinhaber: Robert Bosch GmbH, 70442 Stuttgart (DE)
(72) Erfinder: FRIEDRICH, Boris, 70376 Stuttgart (DE); FINN, Ruediger, 70376 Stuttgart (DE)
(86) Internationale Anmeldenummer: PCT/EP2014/069856
(87) Internationale Veröffentlichungsnummer: WO 2015/044017

(56) Entgegenhaltungen:
- EP-A2- 1 693 137
- WO-A2-2010/027908
- DE-A1- 2 440 040
- DATABASE WPI Week 199404 Thomson Scientific, London, GB; AN 1994-032934 XP002732835, -& SU 1 785 853 A1 (CAR IND SCI PRODN ASSOC) 7. Januar 1993 (1993-01-07)
- DATABASE WPI Week 199219 Thomson Scientific, London, GB; AN 1992-158081 XP002732836, -& SU 1 655 679 A (PENZA ZAVOP IM FRUN) 15. Juni 1991 (1991-06-15)
- DATABASE WPI Week 198049 Thomson Scientific, London, GB; AN 1980-88017C XP002732837, -& SU 729 258 A (TITOV A M) 30. April 1980 (1980-04-30)

## Beschreibung

Die Erfindung betrifft insbesondere eine thermische Entgratanlage gemäß dem Oberbegriff von Anspruch 1.

Aus der EP 1 693 137 B1 ist eine thermische Entgratanlage bekannt. Die Entgratanlage umfasst ein erstes und ein zweites Kammerteil. Im ersten Kammerteil ist ein Hohlraum zur Aufnahme der zu entgratenden Werkstücke vorgesehen. Das zweite Kammerteil ist in Form einer Platte ausgebildet, welche mit einer Schließvorrichtung verbunden ist.
Mit der Schließvorrichtung kann das zweite Kammerteil bezüglich einer Schließrichtung gegen das erste Kammerteil gedrückt werden, um die Entgratkammer gasdicht zu verschließen. Hinzuweisen ist außerdem auf das dritte Kammerteil, welches gegenüberliegend zum zweiten Kammerteil an dem ersten Kammerteil angeordnet ist, wobei es im Wesentlichen identisch zum zweiten Kammerteil ausgebildet ist. Das dritte Kammerteil könnte aber genauso gut einstückig in dem ersten Kammerteil ausgebildet sein. Das erste Kammerteil kann in Richtung einer Querachse, welche senkrecht zur Schließrichtung ausgerichtet ist, aus der thermischen Entgratanlage entnommen werden, um diese mit den zu entgratenden Werkstücken zu füllen.

Die Kammerteile werden von einer Tragbaugruppe ringförmig umgeben, welche aus einem ersten und einem zweiten plattenartigen Träger besteht, welche über insgesamt vier Zuganker fest miteinander verbunden sind. Beim Schließen der Entgratkammer stützt sich die Schließvorrichtung an der Tragbaugruppe ab. Weiter nimmt die Tragvorrichtung die Gasdruckkräfte auf, welche durch die Explosion des Brenngases im Inneren der Entgratkammer entstehen. Die Tragbaugruppe ist dementsprechend sehr massiv ausgebildet.

Aus der DE 24 40 040 A1 ist eine weitere thermische Entgratanlage bekannt, die die Merkmale des Oberbegriffs des unabhängigen Anspruchs 1 aufweist.

Die Aufgabe der Erfindung besteht darin, eine besonders Material sparende und kompakte thermische Entgratanlage bereit zu stellen. Weiter soll die thermische Entgratanlage mit kleinen Antrieben zur Bewegung der beweglichen Teile auskommen.

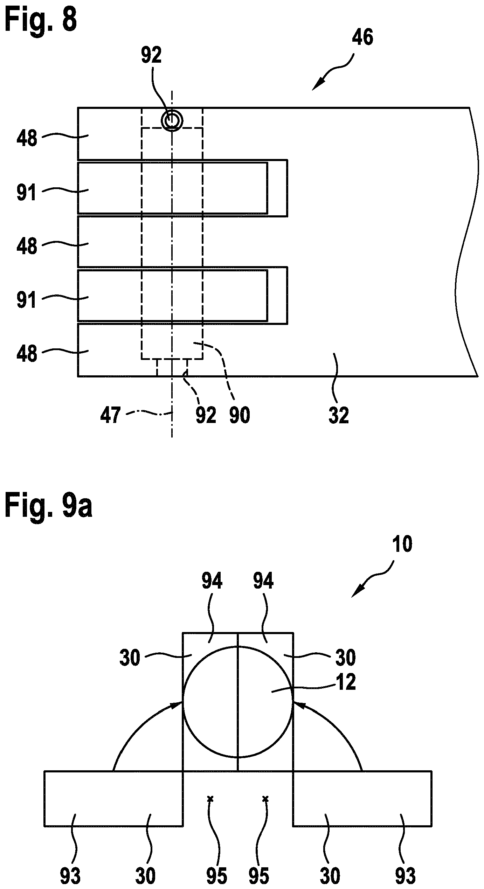

Diese Aufgabe wird durch eine thermische Entgratanlage gemäß dem unabhängigen Anspruch 1 gelöst, bei der die wenigstens eine Tragbaugruppe quer zur Schließrichtung beweglich relativ zur Schließvorrichtung ist. Dementsprechend wird nicht mehr das schwere erste Kammerteil gegenüber der Schließvorrichtung bewegt, sondern die wenigstens eine Tragbaugruppe. Wie im Folgenden noch dargestellt wird, kann diese sehr Material sparend ausgebildet werden. Dementsprechend können auch die Antriebe zur Bewegung der Tragbaugruppe klein ausgebildet werden. Vorzugsweise ist die wenigstens eine Tragbaugruppe linearbeweglich. Die Tragbaugruppe kann aber auch auf jeder beliebigen anderen Bahn bewegt werden, solange die Bewegung quer zur Schließrichtung erfolgt, was mit Bezug auf die Fig. 9a bis 9c noch näher erläutert wird. In den abhängigen Ansprüchen sind vorteilhafte Weiterbildungen und Verbesserungen der Erfindung angegeben.

Es können wenigstens zwei, vorzugsweise genau zwei, Tragbaugruppen vorgesehen sein, welche quer zur Schließrichtung relativ zueinander beweglich sind.

Vorzugsweise ist daran gedacht, die Tragbaugruppen beim Betrieb der thermischen Entgratanlage in entgegengesetzte Richtungen zu bewegen, damit sich die durch die Bewegung verursachten Massenkräfte kompensieren. Dementsprechend wird das Gestell der thermischen Entgratanlage durch die Bewegung der Tragbaugruppen kaum in Schwingung versetzt. Eine besonders massive Ausgestaltung des Gestells ist nicht erforderlich.

Die wenigstens eine Tragbaugruppe kann einen ersten und einen zweiten biegesteifen Träger aufweisen, welche über wenigstens zwei Zuganker so miteinander verbunden sind, dass sich ein geschlossener Ring ergibt. Der erste und der zweite Träger sind vorzugsweise breiter als das erste und das zweite Kammerteil. Soweit mehrere Tragbaugruppen zum Einsatz kommen, gilt dies vorzugsweise für alle Tragbaugruppen. Der Abstand des ersten und des zweiten Trägers in Schließrichtung ist vorzugsweise größer als die Summe der Höhen des ersten und des zweiten Kammerteils.

Die wenigstens eine Tragbaugruppe kann in Richtung der Querachse eine höhere Biegesteifigkeit aufweisen als senkrecht zur Querachse. Die hohe Steifigkeit in Richtung der Querachse bewirkt, dass die Tragbaugruppe bei deren Bewegung nicht bzw. kaum in Schwingung gerät. Die geringere Steifigkeit senkrecht zur Querachse bewirkt eine gleichmäßige Lastverteilung in der Tragbaugruppe, wobei Spannungsspitzen vermieden werden. Dementsprechend können die Bauteile der Tragbaugruppe klein dimensioniert werden, so dass Material eingespart wird.

Die Schließvorrichtung kann im oder am ersten Träger angeordnet sein. Vorzugsweise ist daran gedacht, die Schließvorrichtung innerhalb des ersten Trägers anzuordnen, um Bauraum einzusparen. Die Schließvorrichtung umfasst im Falle hoher Schließkräfte vorzugsweise wenigstens einen Hydraulikzylinder. Bei kleineren Schließkräften kann auch wenigstens ein elektrischer Antrieb vorgesehen sein, der beispielsweise einen Kugelgewindetrieb oder einen Planetengewindetrieb umfasst. Falls mehrere Antriebe vorgesehen sind, so sind diese vorzugsweise bewegungsgekoppelt, so dass sie sich synchron bewegen.

Die wenigstens zwei Zuganker können von einem gemeinsamen Blechteil gebildet werden, welches ausgehend von einer ebenen Platte mit konstanter Dicke zu einem Ring gebogen ist. Die entsprechenden Zuganker weisen bei geringem Materialeinsatz eine hohe Festigkeit und Steifigkeit auf. Weiter ist die Befestigung des vorgeschlagenen Blechteils am ersten und am zweiten Träger besonders einfach. Das Blechteil besteht vorzugsweise aus Stahl. Vorzugsweise ist daran gedacht, einen geraden Flachstahl zu einem im Wesentlichen rechteckigen Ring zu biegen, welcher verrundete Ecken aufweist. Hierdurch werden Materialspannungen im Blechteil minimiert, wobei gleichzeitig die Stützweite des ersten und des zweiten Trägers sinkt, so dass auch deren Beanspruchung geringer wird. Vorzugsweise sind die Träger im Wesentlichen spielfrei an die Innenform des Blechteils angepasst. Die Breite des Flachstahls in Richtung der Querachse ist vorzugsweise zwischen 4- und 12-mal so groß, wie dessen Dicke senkrecht zur Querachse.

Das Blechteil kann zwei Enden aufweisen, welche mit gesonderten Verbindungsmitteln miteinander verbunden sind, wobei die Verbindungsmittel vorzugsweise Schrauben sind. Die Schrauben durchsetzen vorzugsweise die sich überlappenden Enden des Blechteils, wobei sie in den zweiten Träger eingeschraubt sind.

Es kann ein Gestell mit wenigstens einem Querträger vorgesehen sein, welcher die wenigstens eine Tragbaugruppe in Richtung der Querachse durchsetzt. Mit dem Gestell soll die thermische Entgratanlage auf dem Untergrund aufgestellt werden. Das Gestell kann beispielsweise aus Aluminium-Strangpressprofilen zusammengesetzt sein. Es kann aber auch daran gedacht sein, Stahlträger oder Stahlbleche zu verwenden, die beispielsweise miteinander verschweißt und/oder miteinander verschraubt sind.

An dem wenigstens einen Querträger kann wenigstens eine Führungsschiene befestigt sein, an welcher die wenigstens eine Tragbaugruppe, vorzugsweise deren erster Träger, in Richtung der Querachse beweglich geführt ist. Die Führung ist dementsprechend sehr nah am Schwerpunkt der wenigstens einen Tragbaugruppe angeordnet, so dass Schwingungen, insbesondere Biegeschwingungen, der Tragbaugruppe bei deren Bewegung minimiert werden.

Das erste Kammerteil kann fest mit dem Querträger verbunden sein, wobei das erste Kammerteil einen Hohlraum zur Aufnahme der zu entgratenden Werkstücke aufweist, wobei das zweite Kammerteil so ausgebildet ist, dass es mit dem ersten Kammerteil einen abgeschlossenen Hohlraum bilden kann. Dementsprechend ist dasjenige Kammerteil, das von der Schließvorrichtung getragen wird, das schwerere Kammerteil. Das andere, zweite Kammerteil ist vorzugsweise plattenartig ausgebildet, wobei es auch einen kleinen Hohlraum aufweisen kann. Insbesondere ist daran gedacht, das zweite Kammerteil leichter auszubilden als das erste Kammerteil, damit dieses zum Befüllen des Hohlraums, welcher die Entgratkammer bildet, leicht bewegt werden kann.

Die Schließvorrichtung kann an der vom ersten Kammerteil abgewandten Seite des wenigstens einen Querträgers angeordnet sein, wobei sie sich an diesem oder am ersten Kammerteil abstützt. Hierdurch soll insbesondere die Gewichtskraft der wenigstens einen Tragbaugruppe und des ersten Kammerteils auf Platz sparende Weise an dem Querträger abgestützt werden. Hierbei ist anzumerken, dass sich die Schließvorrichtung vorzugsweise unmittelbar am ersten Kammerteil abstützt, wobei das erste Kammerteil fest mit dem wenigstens einen Querträger verschraubt ist.

Es können genau zwei Tragbaugruppen vorgesehen sein, wobei ein Linearantrieb vorgesehen ist, der dazu eingerichtet ist, die beiden Tragbaugruppen gleichzeitig in entgegengesetzte Richtungen zu bewegen. Hierdurch wird die bereits angesprochene Kompensation der Massenkräfte bei der Bewegung der Tragbaugruppen auf besonders einfache Weise erreicht.

Es kann eine Hubvorrichtung vorgesehen sein, mit welcher das zweite Kammerteil zumindest in Schließrichtung bewegt werden kann. Mit der Hubvorrichtung soll das zweite Kammerteil vom ersten Kammerteil entfernt und wieder an dieses herangeführt werden, damit dieses mit den zu entgratenden Werkstücken beladen bzw. entladen werden kann.

Vorzugsweise kann das zweite Kammerteil von der wenigstens einen Tragbaugruppe gegriffen werden, indem diese in Richtung der Querachse bewegt werden. Hierdurch wird die Gewichtskraft des zweiten Kammerteils von der wenigstens einen Tragbaugruppe aufgenommen. Dabei liegt das zweite Kammerteil vorzugsweise lose auf der genannten Hubvorrichtung auf, damit es von dieser abgehoben werden kann. Vorzugsweise sind zum Greifen des zweiten Kammerteils zwei Tragbaugruppen vorgesehen.

Der zweite Träger kann eine an das zweite Kammerteil angepasste Vertiefung aufweisen. Die zweiten Träger stoßen hierbei vorzugsweise erst dann an das zweite Kammerteil an, wenn sich dieses zumindest teilweise unter diesem befindet. Die Kontaktfläche zwischen dem zweiten Träger und dem zweiten Kammerteil ist durch die Form der Vertiefung vorzugsweise so gestaltet, dass die Schließkraft zentrisch in die Zuganker eingeleitet wird. Hierdurch entstehen besonders geringere Spannungen in den Zugankern, so dass diese mit kleinen Abmessungen ausgebildet werden können.

Die Erfindung wird im Folgenden anhand der beigefügten Zeichnungen näher erläutert. Es stellt dar:
- Fig. 1: eine Seitenansicht der Tragbaugruppen und der Kammerteile bei geöffneter Entgratkammer;
- Fig. 2: eine Teilschnittansicht der erfindungsgemäßen thermischen Entgratanlage bei geschlossener Entgratkammer;
- Fig. 3: eine Teilschnittansicht der erfindungsgemäßen thermischen Entgratanlage, wobei sich die Tragbaugruppen in einer mittleren Stellung befinden;
- Fig. 4: eine Schnittansicht des ersten Trägers mit der Schließvorrichtung;
- Fig. 5: eine perspektivische Ansicht einer erfindungsgemäßen thermischen Entgratanlage;
- Fig. 5a: die thermische Entgratanlage nach Fig. 5 aus einer anderen Blickrichtung;
- Fig. 6: eine Vorderansicht der Tragbaugruppe der thermischen Entgratanlage nach Fig. 5;
- Fig. 6a: eine perspektivische Ansicht zweier spiegelbildlicher Tragbaugruppen nach Fig. 6;
- Fig. 7: eine perspektivische Ansicht einer zweiten Ausführungsform 30' der Tragbaugruppe;
- Fig. 8: eine Draufsicht eines vierschnittigen Drehgelenks.
- Fig. 9a: eine grobschematische Dartstellung einer ersten Bahn der Tragbaugruppen;
- Fig. 9b: eine grobschematische Dartstellung einer zweiten Bahn der Tragbaugruppen;
- Fig. 9c: eine grobschematische Dartstellung einer zweiten Bahn der Tragbaugruppen;

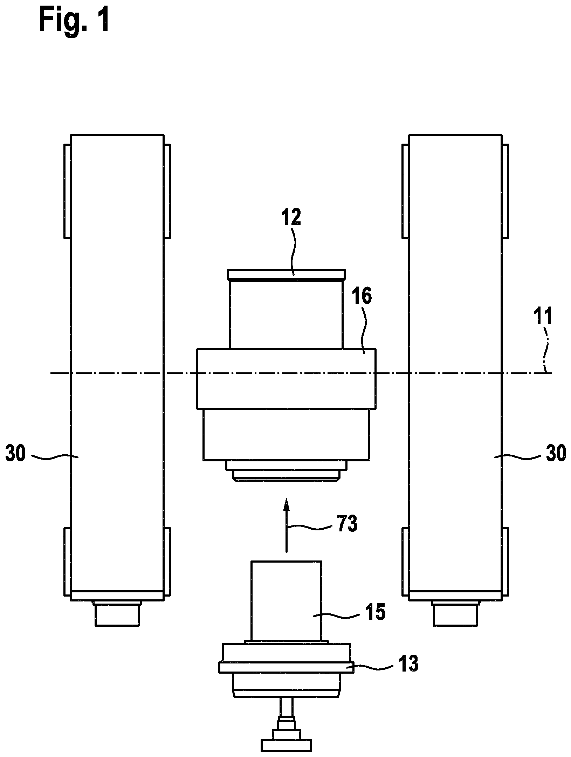

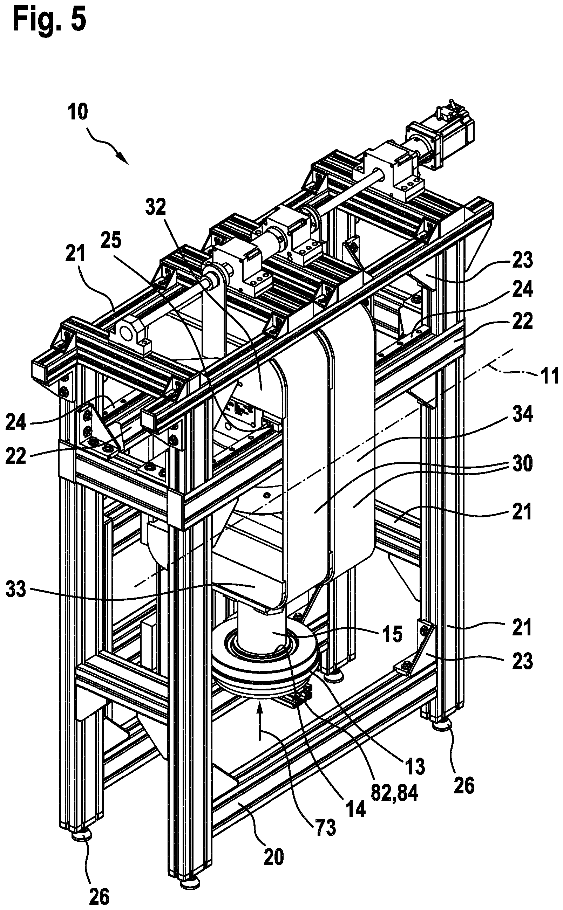

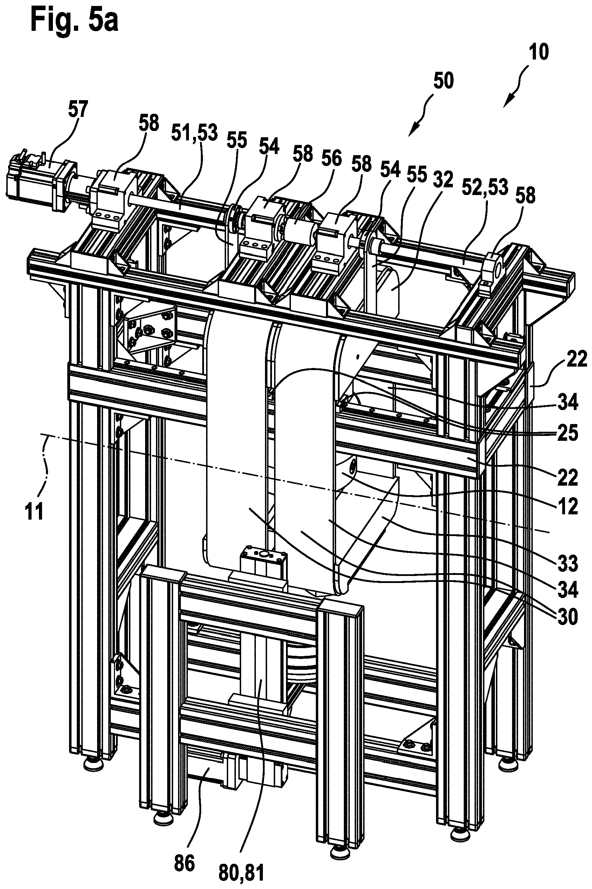

Fig. 1 zeigt eine Seitenansicht der Tragbaugruppen 30 und der Kammerteile 12; 13 bei geöffneter Entgratkammer. Die verbleibenden Teile der thermischen Entgratanlage sind der Übersichtlichkeit halber nicht dargestellt. Hierzu wird auf die Fig. 5 und 5a verwiesen, welche die vollständige Anlage zeigen.

Das erste Kammerteil 12 ist im Wesentlichen zylindrisch ausgebildet und besteht aus Stahl, damit es dem Explosionsdruck Stand halten kann. Im Inneren befindet sich ein Hohlraum, welcher das Werkstück 15 aufnehmen kann. Das Werkstück 15 ist rein beispielhaft als Zylinder dargestellt. Mit der erfindungsgemäßen thermischen Entgratanlage können beliebige Werkstücke aus Metall oder Kunststoff behandelt werden, wobei mehrere Werkstücke gleichzeitig behandelt werden können. Das erste Kammerteil 12 ist von einem Kühlmantel 16 umgeben, welcher von einer Kühlflüssigkeit, beispielsweise Wasser, durchströmt werden kann, um die Explosionswärme abzuführen.

Das oder die Werkstücke 15 werden zum Beladen der thermischen Entgratanlage auf das zweite Kammerteil 13 lose aufgelegt. Das zweite Kammerteil 13 ist im Wesentlichen plattenartig ausgebildet und besteht ebenfalls aus Stahl. Nachdem das zweite Kammerteil 13 beladen ist wird dieses mit der Hubvorrichtung (Nr. 80; Fig. 5a) in Schließrichtung 73 nach oben gefahren, bis es am ortsfesten ersten Kammerteil 12 anliegt. Diese Bewegung erfolgt vorzugsweise Weg gesteuert, beispielsweise mittels eines Endschalters für das zweite Kammerteil oder mittels eines Wegmesssystems an der Hubvorrichtung. Die vorstehende Bewegung kann prinzipiell jede beliebige Bahnform aufweisen. Es kommt einzig darauf an, dass am Anfang der Bewegung das zweite Kammerteil 13 zur Beladung frei zugänglich ist, wobei es am Ende der Bewegung am ersten Kammerteil 12 anliegt.

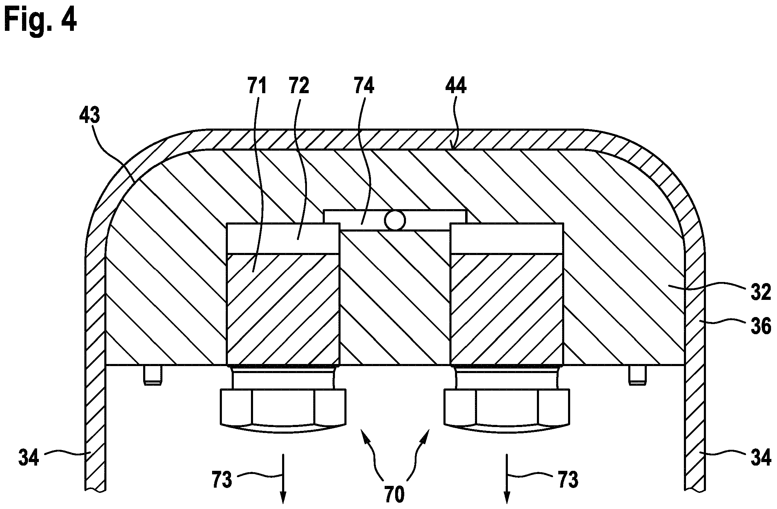

Während des Beladens sind die beiden Tragbaugruppen 30 in Richtung der Querachse 11 zur Seite gefahren, damit sie die Bewegung des zweiten Kammerteils 13 nicht behindern. Die Querachse 11 verläuft dabei senkrecht zur Schließrichtung 73, wobei die Schließrichtung 73 durch die Bewegungsrichtung der in Fig. 4 dargestellten Schließvorrichtung definiert wird. Bei thermischen Entgratanlagen mit geringen Betriebsdrücken und kleinem Volumen der Entgratkammer kann auch nur eine einzige Tragbaugruppe 30 vorgesehen sein.

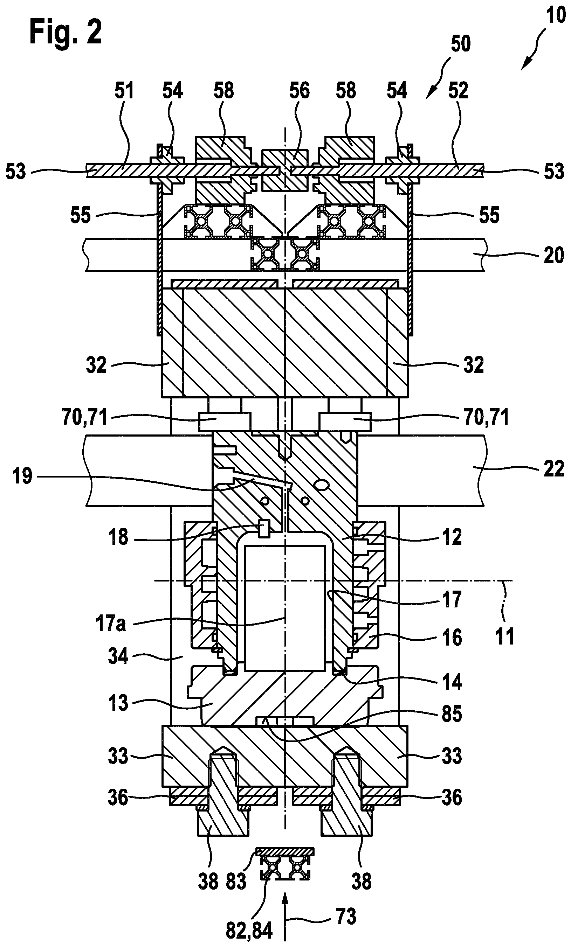

Fig. 2 zeigt eine Teilschnittansicht der erfindungsgemäßen thermischen Entgratanlage 10 bei geschlossener Entgratkammer 17, wobei die Schnittebene die Mittelachse 17a der Entgratkammer 17 und die Querachse 11 enthält. Die Tragbaugruppen 30 befinden sich dabei in der Stellung, in welcher sie die Explosionskräfte aufnehmen können, also in einer Stellung, in der sie den geringstmöglichen Abstand aufweisen.

Die Entgratkammer 17 wird vorzugsweise von einem Hohlraum gebildet, der im Wesentlichen kreiszylindrisch bezüglich der Mittelachse 17a ausgebildet ist, welche vorzugsweise parallel zur Schließrichtung 73 verläuft. In die Entgratkammer 17 kann über einen Gaszuführkanal 19 ein brennbares Gasgemisch eingefüllt werden, wobei der Fülldruck beispielsweise zwischen 5 bar und 25 bar beträgt. Mit der (grobschematisch dargestellten) Zündkerze 18 wird dieses Gasgemisch zur Explosion gebracht, wodurch der Druck in der Entgratkammer beispielsweise um den Faktor 17 ansteigt. Durch diese Explosion werden Bearbeitungsgrate von dem Werkstück 15 entfernt. Das erste und das zweite Kammerteil 12; 13 werden von den Tragbaugruppen 30 gegen den Explosionsdruck zusammen gehalten, so dass die Entgratkammer druckdicht verschlossen bleibt. Dabei sind die Tragbaugruppen 30 sehr großen Beanspruchungen ausgesetzt. In diesem Zusammenhang ist auch auf die Dichtung 14 zwischen dem ersten und dem zweiten Kammerteil 12; 13 hinzuweisen, die beispielsweise gemäß der EP 1 837 111 B1 ausgebildet sein kann.

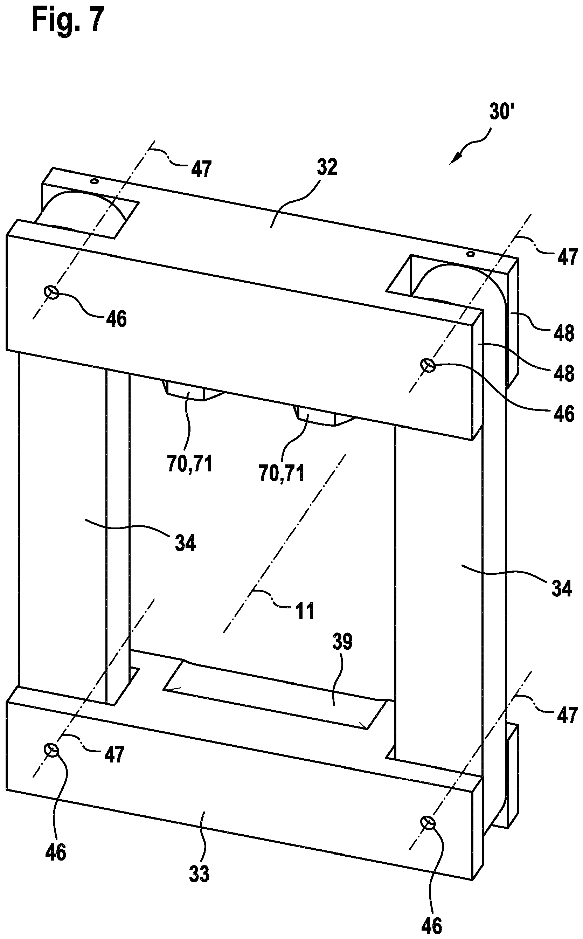

Die beiden Tragbaugruppen 30 sind spiegelsymmetrisch oder um 180° gedreht zueinander ausgebildet. Sie umfassen jeweils einen ersten und einen zweiten, biegesteifen Träger 32; 33, die von Zugankern 34 zusammengehalten werden. Die Zuganker 34 können dabei wahlweise von dem vorliegend dargestellten Blechteil 36 gebildet werden oder von den in Fig. 7 dargestellten gesonderten Zugankern. Beide Ausführungsformen haben gemeinsam, dass die Tragbaugruppen 30 hinsichtlich einer Belastung in Richtung der Querachse 11 eine hohe Biegesteifigkeit aufweisen, so dass sie bei der Schließbewegung nicht in Schwingung geraten. Senkrecht zur Querrichtung 11 weisen sie eine geringe Steifigkeit auf, so dass sich die Kräfte in der Tragbaugruppe 30 gleichmäßig verteilen.

Auf den beiden zweiten Trägern 33 liegt das zweite Kammerteil 13 auf. Das erste Kammerteil 12 ist fest mit den Querträgern 22 verbunden, welche vorzugsweise an der Umfangsfläche des ersten Kammerteils 12 befestigt sind. Im ersten Träger 32 ist die Schließvorrichtung 70 angeordnet, deren beide Kolbenstangen 71 sich in Schließrichtung 73 bewegen. Die Kolbenstangen 71 stützen sich dabei vorzugsweise unmittelbar am ersten Kammerteil 12 ab. Wenn die Kolbenstangen 71 ausgefahren werden, bewegt sich der erste Träger 32 in Fig. 2 nach oben. Über die Zuganker 34 folgt der zweite Träger 33 dieser Bewegung, so dass das zweite Kammerteil 13 gegen das erste Kammerteil 12 gedrückt wird, bis die Dichtung 14 dicht verschlossen ist.

In Fig. 2 ist der Hubtisch 82 der Hubvorrichtung zu erkennen, welcher sich im geschlossenen Zustand der thermischen Entgratanlage 10 unterhalb der Tragbaugruppen 30 befindet. Der Hubtisch 82 umfasst einen Auslegerarm 84, der beispielsweise in Form eines Aluminium-Strangpressprofils ausgebildet sein kann. Am freien Ende des Auslegerarmes 84 ist ein Zentrierteller 83 befestigt, der beispielsweise in Form einer kreisrunden Platte ausgebildet sein kann. Das zweite Kammerteil 13 weist eine angepasste Zentrierausnehmung 85 auf, mit der es beim Beladen der thermischen Entgratanlage lose auf dem Zentrierteller 83 aufliegt.

Weiter ist in Fig. 2 der Linearantrieb 50 zu erkennen, mit welchem die Tragbaugruppen 30 in Bewegung versetzt werden. Anstelle der vorliegend dargestellten Gewindetriebe 51; 52 kann jeder beliebige andere Linearantrieb, beispielsweise ein Zahnriementrieb zum Einsatz kommen. Entgegen der Darstellung ist der Linearantrieb 50 vorzugsweise gekapselt ausgebildet, so dass er vor Umgebungseinflüssen geschützt ist.

Mit dem Linearantrieb 50 werden die beiden Tragbaugruppen 30 gleichzeitig in entgegengesetzte Richtungen bewegt, damit die bei deren Bewegung auf das Gestell 20 einwirkenden effektiven Massenkräfte gering sind. Hierfür ist ein erster und ein zweiter Gewindetrieb 51; 52 vorgesehen, deren Gewindespindeln 53 eine entgegengesetzte Steigungsrichtung aufweisen. Die beiden Gewindespindeln 53 sind über eine Kupplung 56 drehfest miteinander verbunden, so dass sie sich synchron bewegen. Vorliegend wird die Gewindespindel 53 des ersten Gewindetriebs 51 von einem Motor (Nr. 57 in Fig. 5), insbesondere einem Elektromotor, angetrieben. An den beiden Enden der Gewindespindeln 53 ist jeweils ein Lagerbock 58 angeordnet, in dem die zugeordnete Gewindespindel, vorzugsweise über ein Radialwälzlager, drehbar gelagert ist. Die Lagerböcke 58 sind fest mit dem Gestell 20 verbunden. Beide Gewindespindeln 53 stehen mit einer zugeordneten Mutter 54, die vorzugsweise als Kugelumlaufmutter ausgebildet ist, in Schraubeingriff. Die Muttern 54 sind über ein zugeordnetes Koppelteil 55, welches beispielsweise plattenartig ausgebildet ist, mit einer zugeordneten Tragbaugruppe 30 bewegungsgekoppelt. Dementsprechend werden die Tragbaugruppen 30 in eine geradlinige Bewegung versetzt, wenn die Gewindespindeln 53 in Drehbewegung versetzt werden.

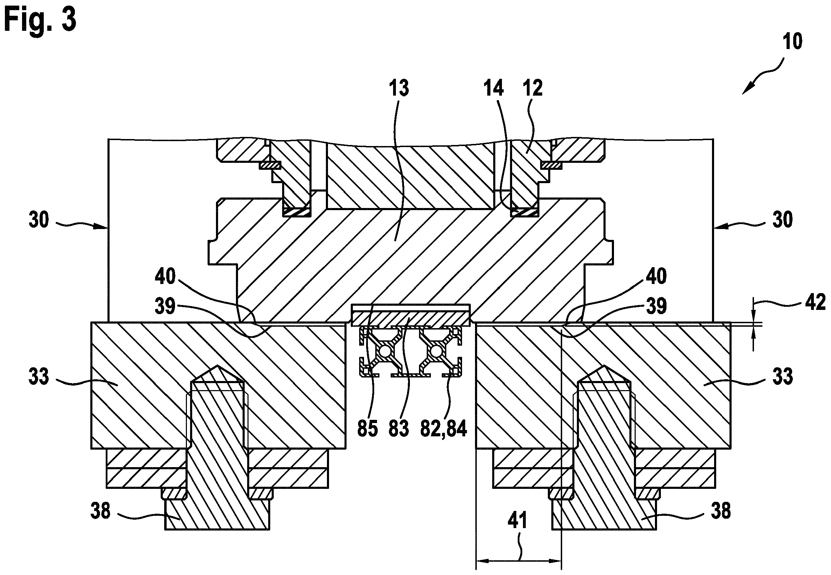

Fig. 3 zeigt eine Teilschnittansicht der erfindungsgemäßen thermischen Entgratanlage 10, wobei sich die Tragbaugruppen 30 in einer mittleren Stellung befinden. Die Schnittebene ist die gleiche wie in Fig. 2.

Damit die zweiten Träger 33 der Tragbaugruppen 30 problemlos unter das zweite Kammerteil 13 bewegt werden können, sind diese jeweils mit einer Ausnehmung 39 versehen, die im Mittelbereich des zweiten Trägers 33 mit einer Einführschräge 40 endet. Die Tiefe 42 der Ausnehmung 39 ist so groß gewählt, dass zwischen der Ausnehmung 39 und dem zweiten Kammerteil 13 etwas Spiel vorhanden ist, nachdem diese von der Hubvorrichtung zur Anlage mit dem ersten Kammerteil 12 gebracht worden ist. Die Tragbaugruppen 30 können also aufeinander zu bewegt werden, ohne dass diese Bewegung Anfangs von dem zweiten Kammerteil 13 gestört wird. Erst wenn die Einführschräge 40 in Kontakt mit dem zweiten Kammerteil 13 kommt, findet eine geringe Reibung zwischen dem zweiten Kammerteil 14 und den Tragbaugruppen 30 statt. Nachdem die Tragbaugruppen 30 ganz zusammen gefahren sind, wird die Schließvorrichtung betätigt. Hierdurch wird die Dichtung 14 zusammengedrückt, so dass sie auch unter Einwirkung des Explosionsdrucks vollkommen dicht schließt.

In dem in Fig. 3 gezeigten Zustand, in dem das zweite Kammerteil 13 abseits der Ausnehmung 39 etwas auf dem zweiten Träger 33 aufliegt, wird der Hubtisch 82 nach unten verfahren, wobei anschließend die Tragbaugruppen 30 in ihre Endstellung bewegt werden, in der sie den geringstmöglichen Abstand aufweisen. Die Länge 41 der Ausnehmung 39 ist dabei gerade so groß gewählt, dass die Kraft, welche von dem zweiten Kammerteil 13 auf den zweiten Träger 33 übertragen wird, gerade mittig am betreffenden zweiten Träger 33 angreift, so dass eine Biegebeanspruchung der Zuganker 34 vermieden wird.

Fig. 4 zeigt eine Schnittansicht des ersten Trägers 32 mit der Schließvorrichtung 70. Der erste Träger 32 besteht vorzugsweise aus Stahl und weist an der Oberseite eine ebene Auflagefläche 44 auf, auf welcher das Blechteil 36 aufliegt, welches die Zuganker 34 bildet. Das Blechteil 36 liegt weiter auf einer Verrundung 43 am ersten Träger 32 auf, welche absatz- und knickfrei in die Auflagefläche 44 übergeht. Mit den Verrundungen 43 soll die Beanspruchung des Blechteils 36 minimiert werden. Die vorstehend beschriebene Form ist identisch am zweiten Träger vorgesehen. Der erste und/oder der zweite Träger 32; 33 können aus einem oder mehreren Teilen zusammengesetzt sein.

Im Inneren des ersten Trägers 32 ist die Schließvorrichtung 70 untergebracht, welche Kolbenstangen 71 umfasst, die in Schließrichtung 73 beweglich sind. Vorliegend sind zwei Kolbenstangen 71 dargestellt, wobei je nach Größe der thermischen Entgratanlage mehr oder weniger Kolbenstangen 71 vorgesehen sein können. Anzumerken ist, dass die Schließvorrichtung 70 vorliegend insgesamt vier Kolbenstangen 71 umfasst, nämlich je zwei für beiden ersten Träger 32.

Die Kolbenstangen 71 werden vorliegend hydraulisch angetrieben. Hierfür sind sie linearbeweglich in einem kreiszylindrischen Zylinderraum 72 aufgenommen, der mit sehr geringem Spiel an die Kolbenstangen 71 angepasst ist. Dem Zylinderraum 72 kann über die Fluidkanäle 74 Druckfluid, insbesondere Hydrauliköl, zugeführt werden, so dass die Kolbenstangen 71 in Schließrichtung 73 ausfahren. Die Rückholung der Kolbenstangen 71, die beispielsweise mittels einer Feder oder hydraulisch bewerkstelligt werden kann, ist nicht dargestellt.

Anstelle des hydraulischen Antriebs der Kolbenstangen 71 kann auch ein elektrischer Antrieb vorgesehen sein, beispielsweise mit einem Gewindetrieb, insbesondere mit einem Planetengewindetrieb.

Fig. 5 zeigt eine perspektivische Ansicht einer erfindungsgemäßen thermischen Entgratanlage 10, wobei die Fig. 5a die gleiche thermische Entgratanlage 10 aus einer anderen Blickrichtung zeigt.

Zu erkennen ist das Gestell 20 der thermischen Entgratanlage 10, welches aus einer Vielzahl von Gestellträgern 21 zusammengesetzt ist, welche über Verbindungswinkel 23 fest miteinander verbunden sind. Die Gestellträger 21 sind vorliegend als Aluminium-Strangpressprofile ausgebildet. Vorzugsweise ist jedoch daran gedacht, das Gestell 20 aus Stahl herzustellen. An dem Gestell 20 sind höhenverstellbare Füße 26 vorgesehen, über die das Gestell 20 auf dem Untergrund steht.

Das Gestell 20 umfasst vorliegend zwei Querträger 22, welche sich in Richtung der Querachse 11 erstrecken, wobei sie die Tragbaugruppen 30 durchsetzen. Oben auf den Querträgern 22 ist je eine Führungsschiene 24 befestigt, auf der mehrere Führungswägen 25 linearbeweglich abgestützt sind, vorzugsweise unter Verwendung von Wälzkörperumläufen. Die Führungswägen 25 sind jeweils an der Unterseite eines zugeordneten ersten Trägers 32 befestigt, so dass die ersten Träger 32 in Richtung der Querachse 11 linearbeweglich geführt sind.

An dem Gestell 20 ist außerdem die Hubvorrichtung 80 befestigt, welche ein Linearmodul 81 umfasst, welches beispielsweise gemäß der DE 197 38 988 B4 ausgeführt sein kann. Es umfasst ein Tischteil, welches mit einem Elektromotor 86 in eine Linearbewegung versetzt werden kann, welche parallel zur Schließrichtung 73 ausgerichtet ist. An dem Tischteil ist der bereits angesprochene Auslegerarm 84 befestigt.

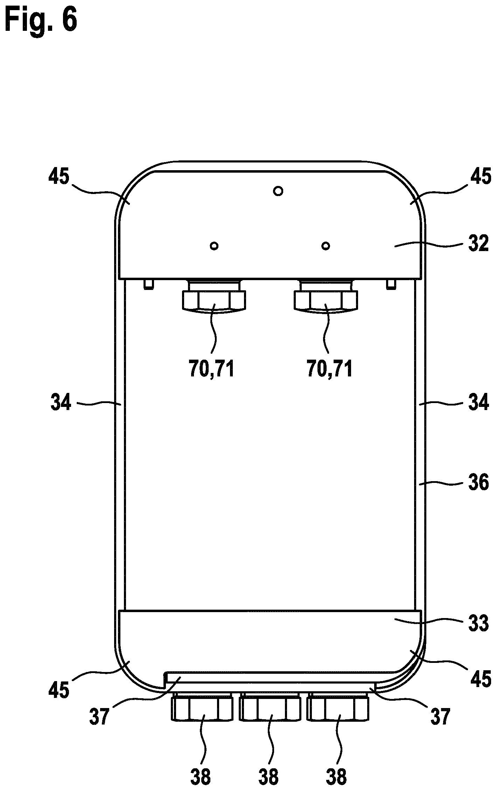

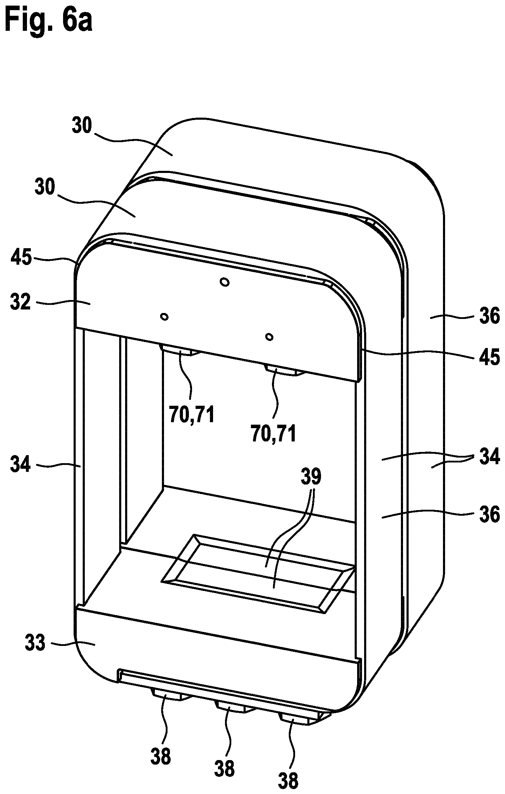

Fig. 6 zeigt eine Vorderansicht der Tragbaugruppe der thermischen Entgratanlage nach Fig. 5.

Die beiden Zuganker 34, zwischen denen das erste und das zweite Kammerteil angeordnet sind, werden von einem gemeinsamen Blechteil 36 gebildet. Dieses wird vorzugsweise ausgehend von einem Flachstahl, also einer ebenen Platte mit konstanter Dicke, zu einem rechteckigen Ring gebogen. Dieser ist an die Form des ersten und des zweiten Trägers angepasst, so dass er an dessen Auflageflächen und dessen Verrundungen (Nr. 43; 44 in Fig. 4) vollflächig aufliegt. An dem ersten und dem zweiten Träger 32; 33 sind im Bereich der Verrundungen Seitenführungen 45 vorgesehen, so dass das Blechteil 36 in Ansichtsrichtung der Fig. 6 nicht von dem ersten und dem zweiten Träger 32; 33 herunterrutschen kann.

Die beiden Enden 37 des Blechteils 36 überlappen sich, wobei sie von beispielsweise drei Schrauben 38 durchsetzt werden, welche in den zweiten Träger 33 eingeschraubt sind, was in Fig. 2 genauer dargestellt ist.

Fig. 6a zeigt eine perspektivische Ansicht zweier spiegelbildlicher Tragbaugruppen 30 nach Fig. 6. Alternativ können auch zwei identische Tragbaugruppen 30 zum Einsatz kommen, die bezüglich der Schließrichtung um 180° gedreht zueinander angeordnet sind. Zu erkennen ist die Rechteckform der bereits angesprochenen Ausnehmung 39 in den beiden zweiten Trägern 33, welche den Kontakt mit dem zweiten Kammerteil herstellen. Diesbezüglich wird auf die Ausführungen zu Fig. 3 verwiesen.

Fig. 7 zeigt eine zweite Ausführungsform 30' der Tragbaugruppe. Diese kann anstelle der ersten Ausführungsform 30 in der thermischen Entgratanlage nach Fig. 5 verwendet werden.

Anstelle des Blechteils sind zwei gesonderte Zuganker 34 vorgesehen, welche an ihren beiden Enden über Drehgelenke 46 mit dem ersten und dem zweiten Träger 32; 33 verbunden sind. Im Übrigen sind der erste und der zweite Träger 32; 33 identisch zu der ersten Ausführungsform der Tragbaugruppe ausgebildet, so dass diesbezüglich auf die obigen Ausführungen verwiesen werden kann.

Die Drehachsen 47 der vier Drehgelenke 46 sind parallel zueinander und verlaufen parallel zur Querachse 11. Dementsprechend besitzt die zweite Ausführungsform 30' der Tragbaugruppe in Richtung der Querachse 11 ein hohe Biegesteifigkeit, wobei sie senkrecht dazu frei beweglich ist. Die damit verbundenen Vorteile wurden oben bereits angesprochen.

Die Drehachsen 47 werden jeweils von einem (nicht sichtbaren) kreiszylindrischen Bolzen definiert, welcher die beiden Gabelschenkel 48 am ersten und am zweiten Träger 32; 33 und den zugeordneten Zuganker 34 durchsetzt. Der genannte Bolzen wird im vorliegenden Ausführungsbeispiel an zwei Stellen auf Abscheren beansprucht. Man spricht daher von einem zweischnittigen Drehgelenk 46.

Fig. 8 zeigt demgegenüber ein vierschnittiges Drehgelenk 46, bei welchem der Bolzen 90 an vier Stellen auf Abscherung beansprucht wird, so dass das Drehgelenk 46 höhere Kräfte übertragen kann. Hier sind am ersten Träger 32 bzw. am zweiten Träger 33 insgesamt drei oder mehr Gabelschenkel 48 vorgesehen, wobei zwischen diesen Gabelschenkel 91 des Zugankers angeordnet sind. Der Bolzen 90 durchsetzt alle Gabelschenkel 48, 91.

Am einen Ende wird der Bolzen 90 durch eine Stufenbohrung 92 gegen eine Lageänderung in Richtung der Drehachse 47 gesichert. Am gegenüberliegenden Ende ist hierfür eine Sicherungsschraube 92 mit Senkkopf und Hülsenmutter vorgesehen.

Fig. 9a zeigt eine grobschematische Darstellung einer ersten Bahn der Tragbaugruppen 30. Die Lage der ortsfesten ersten Entgratkammer 12 ist mit einem Kreis angedeutet. Die Lagen 93; 94 der Tragbaugruppen 30 in der geöffneten und in der geschlossenen Stellung sind jeweils mit einem Rechteck angedeutet, wobei vorliegende zwei Tragbaugruppen 30 zum Einsatz kommen.

In der Ausführungsform nach Fig. 9a sind die Tragbaugruppen 30 jeweils bezüglich eines Drehpunkts 95 drehbeweglich, wobei die Drehpunkte 95 auf der gleichen Seite der ersten Entgratkammer 12 angeordnet sind.

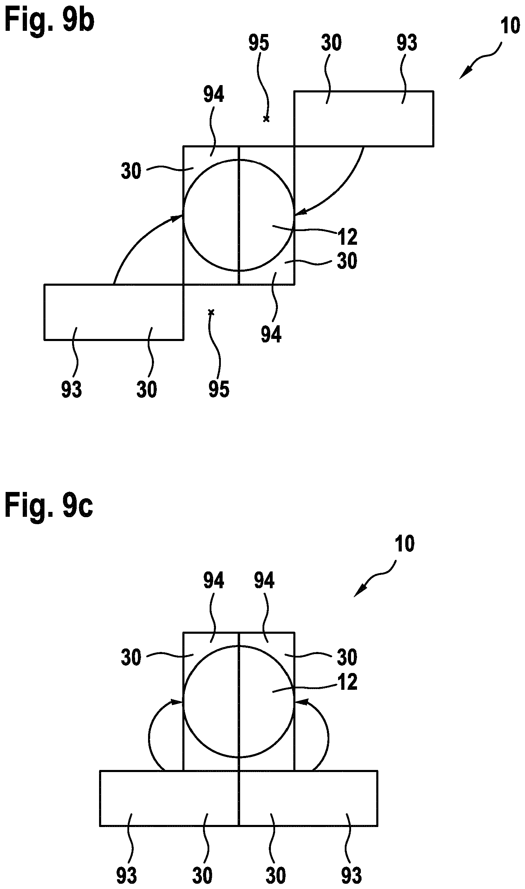

Fig. 9b zeigt eine zu Fig. 9a analoge Darstellung. Der einzige Unterschied besteht darin, dass die Drehpunkte 95 diagonal gegenüberliegend zur ersten Entgratkammer 12 angeordnet sind.

Fig. 9c zeigt eine zu Fig. 9a analoge Darstellung. Der einzige Unterschied besteht darin, dass die kreisförmige Drehbewegung durch eine beliebig gekrümmte Bewegung ersetzt wurde, so dass die beiden Tragbaugruppen 30 in der geöffneten Stellung 93 unmittelbar aneinander anliegen oder einen geringen Abstand zueinander aufweisen. Im Ergebnis verringert sich dadurch die Baubreite der thermischen Entgratanlage 10. Die gezeigte Bewegungsbahn kann beispielsweise mittels eines Viergelenkgetriebes realisiert werden.

### Bezugszeichenliste

- 10: thermische Entgratanlage
- 11: Querachse
- 12: erstes Kammerteil
- 13: zweites Kammerteil
- 14: Dichtung
- 15: Werkstück
- 16: Kühlring
- 17: Hohlraum bzw. Entgratkammer
- 17a: Mittelachse der Entgratkammer
- 18: Zündkerze
- 19: Gaszuführkanal

- 20: Gestell
- 21: Gestellträger
- 22: Querträger
- 23: Verbindungswinkel
- 24: Führungsschiene
- 25: Führungswagen
- 26: Fuß

- 30: Tragbaugruppe (erste Ausführungsform)
- 30': Tragbaugruppe (zweite Ausführungsform)
- 32: erster Träger
- 33: zweiter Träger
- 34: Zuganker
- 36: Blechteil
- 37: Ende des Blechteils
- 38: Verbindungsmittel
- 39: Vertiefung (am zweiten Träger)
- 40: Einführschräge
- 41: Länge der Ausnehmung
- 42: Tiefe der Ausnehmung
- 43: Verrundung
- 44: Auflagefläche
- 45: Seitenführung
- 46: Drehgelenk
- 47: Drehachse
- 48: Gabelschenkel

- 50: Linearantrieb
- 51: erster Gewindetrieb
- 52: zweiter Gewindetrieb
- 53: Gewindespindel
- 54: Mutter
- 55: Koppelteil
- 56: Kupplung
- 57: Motor
- 58: Lagerbock

- 70: Schließvorrichtung
- 71: Kolbenstange
- 72: Zylinderraum
- 73: Schließrichtung
- 74: Fluidkanal

- 80: Hubvorrichtung
- 81: Linearmodul
- 82: Hubtisch
- 83: Zentrierteller
- 84: Auslegerarm
- 85: Zentrierausnehmung
- 86: Elektromotor
- 90: Bolzen
- 91: Gabelschenkel am Zuganker
- 92: Stufenbohrung
- 93: geöffnete Stellung der Tragbaugruppe
- 94: geschlossene Stellung der Tragbaugruppe
- 95: Drehpunkt

## Patentansprüche

1. Thermische Entgratanlage (10) mit einem ersten und einem gesonderten zweiten Kammerteil (12; 13) zur Aufnahme von zu entgratenden Werkstücken (15), wobei eine Schließvorrichtung (70) vorgesehen ist, mit welcher das erste (12) bezüglich einer Schließrichtung (73) gegen das zweite Kammerteil (13) gedrückt werden kann oder umgekehrt, wobei die entsprechenden Schließkräfte von wenigstens einer Tragbaugruppe (30) aufgenommen werden, welche ringförmig bezüglich einer Querachse ausgebildet ist, welche senkrecht zur Schließrichtung (73) ausgerichtet ist,
**dadurch gekennzeichnet, dass** die wenigstens eine Tragbaugruppe (30) quer zur Schließrichtung (73) beweglich relativ zum ersten und zum zweiten Kammerteil (12; 13) ist.

2. Thermische Entgratanlage nach Anspruch 1,
**dadurch gekennzeichnet, dass** wenigstens zwei, vorzugsweise genau zwei, Tragbaugruppen (30) vorgesehen sind, welche quer zur Schließrichtung (73) relativ zueinander beweglich sind.

3. Thermische Entgratanlage nach einem der vorstehenden Ansprüche,
**dadurch gekennzeichnet, dass** die wenigstens eine Tragbaugruppe (30) einen ersten und einen zweiten biegesteifen Träger (32; 33) aufweist, welche über wenigstens zwei Zuganker (34) so miteinander verbunden sind, dass sich ein geschlossener Ring ergibt.

4. Thermische Entgratanlage nach einem der vorstehenden Ansprüche, vorzugsweise nach Anspruch 3,
**dadurch gekennzeichnet, dass** wenigstens eine Tragbaugruppe (30) in Richtung der Querachse (11) eine höhere Biegesteifigkeit aufweist als senkrecht zur Querachse (11).

5. Thermische Entgratanlage nach Anspruch 3 oder 4,
**dadurch gekennzeichnet, dass** die Schließvorrichtung (70) im oder am ersten Träger (32) angeordnet ist.

6. Thermische Entgratanlage nach einem der Ansprüche 3 bis 5,
**dadurch gekennzeichnet, dass** die wenigstens zwei Zuganker von einem gemeinsamen Blechteil (36) gebildet werden, welches ausgehend von einer ebenen Platte mit konstanter Dicke zu einem Ring gebogen ist.

7. Thermische Entgratanlage nach Anspruch 6,
**dadurch gekennzeichnet, dass** das Blechteil (36) zwei Enden (37) aufweist, welche mit gesonderten Verbindungsmitteln (38) miteinander verbunden sind, wobei die Verbindungsmittel (38) vorzugsweise Schrauben sind.

8. Thermische Entgratanlage nach einem der vorstehenden Ansprüche,
**dadurch gekennzeichnet, dass** ein Gestell (20) mit wenigstens einem Querträger (22) vorgesehen ist, welcher die wenigstens eine Tragbaugruppe (30) in Richtung der Querachse (11) durchsetzt.

9. Thermische Entgratanlage nach Anspruch 8,
**dadurch gekennzeichnet, dass** an dem wenigstens einen Querträger (22) wenigstens eine Führungsschiene (24) befestigt ist, an welcher die wenigstens eine Tragbaugruppe, vorzugsweise deren erste Träger (32), in Richtung der Querachse (11) beweglich geführt ist.

10. Thermische Entgratanlage nach Anspruch 8 oder 9,
**dadurch gekennzeichnet, dass** das erste Kammerteil (12) fest mit dem Querträger (22) verbunden ist, wobei das erste Kammerteil (12) einen Hohlraum (17) zur Aufnahme der zu entgratenden Werkstücke aufweist, wobei das zweite Kammerteil (13) so ausgebildet ist, dass es mit dem ersten Kammerteil (12) einen abgeschlossen Hohlraum bilden kann.

11. Thermische Entgratanlage nach Anspruch 8 bis 10,
**dadurch gekennzeichnet, dass** die Schließvorrichtung (70) an der vom ersten Kammerteil (12) abgewandten Seite des wenigstens einen Querträgers (22) angeordnet ist, wobei sie sich an diesem oder am ersten Kammerteil (12) abstützt.

12. Thermische Entgratanlage nach einem der vorstehenden Ansprüche,
**dadurch gekennzeichnet, dass** genau zwei Tragbaugruppen (30) vorgesehen sind, wobei ein Linearantrieb (50) vorgesehen ist, der dazu eingerichtet ist, die beiden Tragbaugruppen (30) gleichzeitig in entgegengesetzte Richtungen zu bewegen.

13. Thermische Entgratanlage nach Anspruch 12,
**dadurch gekennzeichnet, dass** der Linearantrieb (50) einen ersten und einen zweiten Gewindetrieb (51; 52) umfasst, die entgegen gesetzte Steigungsrichtungen aufweisen, wobei sie von einem gemeinsamen Motor (54) angetrieben werden.

14. Thermische Entgratanlage nach einem der vorstehenden Ansprüche,
**dadurch gekennzeichnet, dass** eine Hubvorrichtung (80) vorgesehen ist, mit welcher das zweite Kammerteil (13) zumindest in Schließrichtung (73) bewegt werden kann.

15. Thermische Entgratanlage nach Anspruch 14,
**dadurch gekennzeichnet, dass** das zweite Kammerteil von der wenigstens einen Tragbaugruppe (30) gegriffen werden kann, indem diese in Richtung der Querachse (11) bewegt werden.

16. Thermische Entgratanlage nach einem der Ansprüche 2 bis 14,
**dadurch gekennzeichnet, dass** der zweite Träger (33) eine an das zweite Kammerteil (39) angepasste Vertiefung aufweist.

17. Thermische Entgratanlage nach einem der vorstehenden Ansprüche,
**dadurch gekennzeichnet, dass** die Tragbaugruppe (30) quer zur Schließrichtung (73) entlang einer Bahn beweglich ist, welche wahlweise geradlinig oder gekrümmt, vorzugsweise kreisförmig gekrümmt, verläuft.

## Claims

1. Thermal deburring installation (10) having a first and a separate second chamber part (12; 13) for receiving workpieces (15) to be deburred, wherein a closing device (70) is provided, by means of which the first chamber part (12) can be pushed against the second chamber part (13), or vice versa, with respect to a closing direction (73), wherein the corresponding closing forces are absorbed by at least one supporting assembly (30), which has a form that is annular with respect to a transverse axis which is oriented perpendicularly to the closing direction (73),
**characterized in that** the at least one supporting assembly (30) can be moved relative to the first and the second chamber part (12; 13) transversely to the closing direction (73).

2. Thermal deburring installation according to Claim 1,
**characterized in that** at least two, preferably precisely two, supporting assemblies (30) are provided which can be moved relative to one another transversely to the closing direction (73) .

3. Thermal deburring installation according to either of the preceding claims,
**characterized in that** the at least one supporting assembly (30) has a first and a second flexurally rigid support (32; 33), which are connected to one another via at least two tie rods (34) such that a closed ring is produced.

4. Thermal deburring installation according to one of the preceding claims, preferably according to Claim 3,
**characterized in that** at least one supporting assembly (30) has a higher flexural stiffness in the direction of the transverse axis (11) than perpendicular to the transverse axis (11).

5. Thermal deburring installation according to Claim 3 or 4,
**characterized in that** the closing device (70) is arranged in or on the first support (32).

6. Thermal deburring installation according to one of Claims 3 to 5,
**characterized in that** the at least two tie rods are formed by a common sheet-metal part (36) which is bent, starting from a flat plate of constant thickness, to form a ring.

7. Thermal deburring installation according to Claim 6,
**characterized in that** the sheet-metal part (36) has two ends (37), which are connected to one another by separate connecting means (38), wherein the connecting means (38) are preferably screws.

8. Thermal deburring installation according to one of the preceding claims,
**characterized in that** a frame (20) having at least one transverse support (22), which passes through the at least one supporting assembly (30) in the direction of the transverse axis (11), is provided.

9. Thermal deburring installation according to Claim 8,
**characterized in that** fastened to the at least one transverse support (22) is at least one guide rail (24), on which the at least one supporting assembly, preferably the first support (32) thereof, is movably guided in the direction of the transverse axis (11).

10. Thermal deburring installation according to Claim 8 or 9,
**characterized in that** the first chamber part (12) is connected fixedly to the transverse support (22), wherein the first chamber part (12) has a cavity (17) for receiving the workpieces to be deburred, wherein the second chamber part (13) is designed such that it can form a closed-off cavity together with the first chamber part (12).

11. Thermal deburring installation according to Claims 8 to 10,
**characterized in that** the closing device (70) is arranged on that side of the at least one transverse support (22) which faces away from the first chamber part (12), wherein said closing device is supported on said transverse support or on the first chamber part (12).

12. Thermal deburring installation according to one of the preceding claims,
**characterized in that** precisely two supporting assemblies (30) are provided, wherein a linear drive (50) is provided which is configured to move the two supporting assemblies (30) at the same time in opposite directions.

13. Thermal deburring installation according to Claim 12,
**characterized in that** the linear drive (50) comprises a first and a second screw drive (51; 52) which have opposite pitch directions, wherein said screw drives are driven by a common motor (54) .

14. Thermal deburring installation according to one of the preceding claims,
**characterized in that** a lifting device (80) is provided, by means of which the second chamber part (13) can be moved at least in the closing direction (73).

15. Thermal deburring installation according to Claim 14,
**characterized in that** the second chamber part can be grasped by the at least one supporting assembly (30) **in that** they are moved in the direction of the transverse axis (11).

16. Thermal deburring installation according to one of Claims 2 to 14,
**characterized in that** the second support (33) has an indentation adapted to the second chamber part (39).

17. Thermal deburring installation according to one of the preceding claims,
**characterized in that** the supporting assembly (30) can be moved transversely to the closing direction (73) along a path which optionally extends in a straight line or in a curved manner, preferably in a circularly curved manner.

## Revendications

1. Système d'ébavurage thermique (10) comprenant des première et deuxième parties de chambre séparées (12 ; 13) destinées à recevoir des pièces (15) à ébavurer, un dispositif de fermeture (70) étant prévu avec lequel la première partie de chambre (12) peut être pressée contre la deuxième partie de chambre (13) par rapport à une direction de fermeture (73) ou vice versa, les forces de fermeture correspondantes étant absorbées par au moins un ensemble porteur (30) qui est de forme annulaire par rapport à un axe transversal qui est orienté perpendiculairement à la direction de fermeture (73),
**caractérisé en ce que** l'au moins un ensemble porteur (30) est mobile transversalement à la direction de fermeture (73) par rapport aux première et deuxième parties de chambre (12 ; 13).

2. Système d'ébavurage thermique selon la revendication 1,
**caractérisé en ce qu'**au moins deux, de préférence exactement deux, ensembles porteurs (30) sont prévus qui sont mobiles l'un par rapport à l'autre transversalement à la direction de fermeture (73).

3. Système d'ébavurage thermique selon l'une des revendications précédentes,
**caractérisé en ce que** l'au moins un ensemble porteur (30) comporte des premier et deuxième supports rigides (32 ; 33) qui sont reliés l'un à l'autre par le biais d'au moins deux tirants (34) de façon à obtenir un anneau fermé.

4. Système d'ébavurage thermique selon l'une des revendications précédentes, de préférence selon la revendication 3,
**caractérisé en ce qu'**au moins un ensemble porteur (30) présente une rigidité en flexion plus élevée dans la direction de l'axe transversal (11) que perpendiculairement à l'axe transversal (11).

5. Système d'ébavurage thermique selon la revendication 3 ou 4,
**caractérisé en ce que** le dispositif de fermeture (70) est disposé dans ou sur le premier support (32).

6. Système d'ébavurage thermique selon l'une des revendications 3 à 5,
**caractérisé en ce que** les au moins deux tirants sont formés par une pièce en tôle commune (36) qui est pliée à partir d'une plaque plane d'épaisseur constante pour former un anneau.

7. Système d'ébavurage thermique selon la revendication 6,
**caractérisé en ce que** la pièce en tôle (36) comporte deux extrémités (37) qui sont reliées l'une à l'autre par des moyens de liaison séparés (38), les moyens de liaison (38) étant de préférence des vis.

8. Système d'ébavurage thermique selon l'une des revendications précédentes,
**caractérisé en ce qu'**un châssis (20) est prévu qui comprend au moins une traverse (22) qui passe à travers l'au moins un ensemble porteur (30) dans la direction de l'axe transversal (11).

9. Système d'ébavurage thermique selon la revendication 8,
**caractérisé en ce qu'**au moins un rail de guidage (24), sur lequel l'au moins un ensemble porteur, de préférence le premier support (32) de celui-ci, est guidé de manière mobile dans la direction de l'axe transversal (11), est fixé à l'au moins une traverse (22) .

10. Système d'ébavurage thermique selon la revendication 8 ou 9,
**caractérisé en ce que** la première partie de chambre (12) est reliée de manière fixe à la traverse (22), la première partie de chambre (12) comportant une cavité (17) destinée à recevoir les pièces à ébavurer, la deuxième partie de chambre (13) étant conçue de manière à pouvoir former avec la première partie de chambre (12) une cavité fermée.

11. Système d'ébavurage thermique selon les revendications 8 à 10,
**caractérisé en ce que** le dispositif de fermeture (70) est disposé du côté de l'au moins une traverse (22) qui est opposé à la première partie de chambre (12), le dispositif de fermeture s'appuyant sur cette traverse ou sur la première partie de chambre (12).

12. Système d'ébavurage thermique selon l'une des revendications précédentes, **caractérisé en ce qu'**exactement deux ensembles porteur (30) sont prévus, un entraînement linéaire (50) étant prévu qui est adapté pour déplacer les deux ensembles porteurs (30) simultanément dans des directions opposées.

13. Système d'ébavurage thermique selon la revendication 12,
**caractérisé en ce que** l'entraînement linéaire (50) comprend des premier et deuxième entraînements à vis (51 ; 52) qui ont des directions de pas opposées, les entraînements à vis étant entraînés par un moteur commun (54).

14. Système d'ébavurage thermique selon l'une des revendications précédentes,
**caractérisé en ce qu'**un dispositif de levage (80) est prévu qui permet de déplacer la deuxième partie de chambre (13) au moins dans la direction de fermeture (73) .

15. Système d'ébavurage thermique selon la revendication 14,
**caractérisé en ce que** la deuxième partie de chambre peut être saisie par l'au moins un ensemble porteur (30) en le déplaçant dans la direction de l'axe transversal (11).

16. Système d'ébavurage thermique selon l'une des revendications 2 à 14,
**caractérisé en ce que** le deuxième support (33) comporte un évidement adapté à la deuxième partie de chambre (39).

17. Système d'ébavurage thermique selon l'une des revendications précédentes,
**caractérisé en ce que** l'ensemble porteur (30) est mobile transversalement à la direction de fermeture (73) selon une trajectoire soit rectiligne, soit incurvée, de préférence circulaire.
